# EUROPÄISCHE PATENTSCHRIFT

(11) **EP 1 081 913 B1**
(45) Veröffentlichungstag und Bekanntmachung des Hinweises auf die Patenterteilung: **19.04.2006**
(21) Anmeldenummer: 00203001.3
(22) Anmeldetag: 29.08.2000
(51) Int. Cl.: H04L 29/06, H04Q 7/38

(54) **Netzwerk mit einer Kennungsreduktion**
Network using identifier compression
Réseau utilisant une compression d'identités

(30) Priorität: 30.08.1999 DE 19941092
(43) Veröffentlichungstag der Anmeldung: 07.03.2001
(73) Patentinhaber: Philips Intellectual Property & Standards GmbH, 20099 Hamburg (DE); Koninklijke Philips Electronics N.V., 5621 BA Eindhoven (NL)
(72) Erfinder: Du, Yonggang, 52064 Aachen (DE); Mühlhens, Oliver, 52064 Aachen (DE)
(74) Vertreter: Volmer, Georg

(56) Entgegenhaltungen:
- EP-A- 0 689 316
- EP-A- 0 708 547
- EP-A- 0 750 423
- EP-A- 0 858 236
- WO-A-00/28763
- WO-A-00/48344
- WO-A-00/57663
- US-A- 5 521 917

## Beschreibung

Die Erfindung bezieht sich auf ein Netzwerk zur drahtlosen Übertragung von Informationen mit einer Zentralvorrichtung zur Steuerung von Benutzer-Verbindungen zwischen wenigstens zwei Terminals über eine Benutzer-Verbindungskennung, die aus mehreren Kennungen besteht.

In drahtlosen Netzwerken können zur Kennzeichnung von Verbindungen Benutzer-Verbindungskennungen verwendet werden. Werden beispielsweise mehrere unterschiedliche Kennungen zu einer Benutzer-Verbindungskennung zusammengefasst und weisen die Kennungen z.B. Wortlängen von ca. 6 Bit auf, kann sich ergeben, dass im Netzwerk eine hohe Anzahl von Benutzerkennungen (2¹⁸) verwaltet werden müssen. Eine Verwaltung einer solchen großen Zahl von Benutzerkennungen kann z.B. bei einer Anwendung im Konsumerbereich unmöglich sein.

Aus den nicht vorveröffentlichten Dokumenten WO 00 48344 A, WO 00 28763 A und WO 00 57663 A sind jeweils Netzwerke bekannt, bei denen einzelne Kennungen reduziert werden. Auch aus dem vorveröffentlichten Dokument EP-A-0 708 547 ist bekannt, eine Reduktion einer Kennung durchzuführen.

Der Erfindung liegt die Aufgabe zugrunde, ein Netzwerk mit geringerem Aufwand zu schaffen.

Die Aufgabe wird durch ein Netzwerk der eingangs genannten Art dadurch gelöst, dass wenigstens die Terminals für jede Kennung einen Kompressionsblock zur Reduktion einer Kennung enthalten,
dass wenigstens die Terminals zur Bildung einer reduzierten Gesamtkennung aus den jeweils reduzierten Kennungen vorgesehen sind und
dass wenigstens die Terminals dermaßen gestaltet sind, dass sie die mehr als eine reduzierte Kennung enthaltende reduzierte Gesamtkennung zur Identifizierung einer Benutzer-Verbindung zwischen wenigstens zwei Terminals verwenden.

Unter dem erfindungsgemäßen Netzwerk ist ein drahtloses oder drahtgebundenes Netzwerk zu verstehen. Eine drahtlose Übertragung dient zur Übertragung von Informationen z.B. über Funk-, Ultraschall- oder Infrarotwege. Das Netzwerk enthält eine Zentralvorrichtung, welches für den Aufbau von Verbindungen zwischen Terminals im Netzwerk und auch zwischen Zentralvorrichtung und Terminals verantwortlich ist. Bei einem drahtlosen Netzwerk ist beispielsweise eine Basisstation die Zentralvorrichtung. Ein Terminal kann aber auch die Funktion einer Basisstation übernehmen.

Erfindungsgemäß weisen die Terminals und gegebenenfalls die Zentralvorrichtung in dem Netzwerk einen Kompressionsblock auf, der eine oder mehrere Kennungen reduziert. Die aus einer vollständigen Kennung in einem Kompressionsblock entstandene reduzierte Kennung wird mit den anderen reduzierten Kennungen zu einer Gesamtkennung zusammengefasst.

Durch die beschriebene Reduktionsmethode wird zwar die Anzahl der möglichen im Terminal oder der Zentralvorrichtung zu verwaltenden Verbindungen reduziert, aber dafür ergibt sich ein geringerer Hardwareaufwand (Kostenreduktion) und eine schnellere Verarbeitung der empfangenen Kennungen. Ferner ist die erfindungsgemäße Reduktionsmethode sehr flexibel, da nicht die aus verschiedenen Kennungen zusammengesetzte Gesamtkennung sondern jede einzelne Kennung unabhängig voneinander reduziert wird. Durch die Reduktion jeder einzelnen Kennung können mehr Gesamtkennungen bei einer vorgegebenen Speicherkapazität reduziert werden als bei der alleinigen Reduktion von Gesamtkennungen.

Patentanspruch 2 gibt eine weitere Reduktionsmöglichkeit an. In einem drahtlosen Netzwerk sind die Terminals Mobilstationen und die Zentralvorrichtung zur Steuerung von Verbindungen ist eine Basisstation oder eine Mobilstation mit Funktionen der Basisstation (Anspruch 3).

Die Erfindung bezieht sich auch auf ein Terminal für ein Netzwerk zur drahtlosen Übertragung von Informationen mit einer Zentralvorrichtung zur Steuerung von Benutzer-Verbindungen zwischen wenigstens zwei Terminals über eine Benutzer-Verbindungskennung, die aus mehreren Kennungen besteht. Das Terminal ist durch folgende Merkmale gekennzeichnet:
Das Terminal
- enthält für jede Kennung einen Kompressionsblock zur Reduktion einer Kennung,
- ist zur Bildung einer reduzierten Gesamtkennung aus den jeweils reduzierten Kennungen vorgesehen und
- ist dermaßen gestaltet, dass es die mehr als eine reduzierte Kennung enthaltende reduzierte Gesamtkennung zur Identifizierung einer Benutzer-Verbindung zwischen wenigstens zwei Terminals verwendet.

Ferner bezieht sich die Erfindung auf eine Zentralvorrichtung zur Steuerung von Benutzer-Verbindungen zwischen wenigstens zwei Terminals und/oder einem Terminal und der Zentralvorrichtung über eine Benutzer-Verbindungskennung, die aus mehreren Kennungen besteht, für ein Netzwerk zur drahtlosen Übertragung von Informationen. Die Zentralvorrichtung ist durch folgende Merkmale gekennzeichnet:
Die Zentralvorrichtung
- enthält für jede Kennung einen Kompressionsblock zur Reduktion einer Kennung,
- ist zur Bildung einer reduzierten Gesamtkennung aus den jeweils reduzierten Kennungen vorgesehen und
- ist dermaßen gestaltet, dass sie die mehr als eine reduzierte Kennung enthaltende reduzierte Gesamtkennung zur Identifizierung einer Benutzer-Verbindung zwischen wenigstens einem Terminal und der Zentralvorrichtung verwendet.

Ein Ausführungsbeispiel der Erfindung wird nachstehend anhand der Fig. näher erläutert.
Es zeigen:
- Fig. 1: ein Funknetzwerk mit einer Basisstation und mehreren Terminals und
- Fig. 2: ein in einem Terminal oder der Basisstation nach Fig. 1 verwendetes Funktionsbild mit Kompressorblöcken.

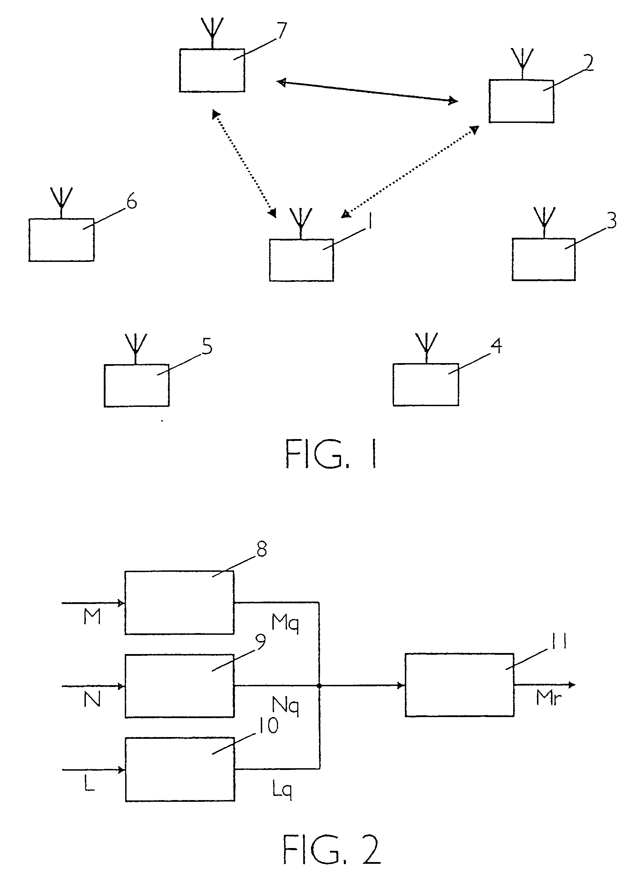

In Fig. 1 ist ein drahtloses Netzwerk, z.B. Funknetzwerk, mit einer Basisstation 1 und mehreren Terminals 2 bis 7 dargestellt. Ein Steuerdatenaustausch findet zumindest zwischen der Basisstation und den Terminals statt. Ein Nutzdatenaustausch kann sowohl zwischen der Basisstation und den Terminals als auch direkt zwischen den Terminals durchgeführt werden. In beiden Fällen wird von der Basisstation die Verbindung zur Übertragung von Nutzdaten aufgebaut. Ein Nutzdatenaustausch zwischen den Terminals 2 und 7 ist durch einen durchgezogene Linie und ein Steuerdatenaustausch zwischen der Basistation 1 und den Terminals 2 bzw. 7 durch eine unterbrochene Linie angedeutet.

Die Terminals 2 bis 7 sind in der Regel Mobilstationen, die von der zumeist fest installierten Basisstation 1 gesteuert werden. Die Basisstation 1 kann gegebenenfalls aber auch beweglich bzw. mobil sein. Die Funktion einer Basisstation kann ferner auch eine bestimmte Mobilstation zusätzlich übernehmen.

In dem drahtlosen Netzwerk werden beispielsweise Funksignale nach dem FDMA-, TDMA- oder CDMA-Verfahren (FDMA = frequency division multiplex access, TDMA = time division multiplex access, CDMA = code division multiplex access) oder nach einer Kombination der Verfahren übertragen.

Nutzdaten und Steuerdaten zwischen wenigstens einem Terminal und einer Basisstation werden über von der Basisstation vorgegebene Kanäle übertragen. Ein Kanal ist durch einen Frequenzbereich, einen Zeitbereich und z.B. beim CDMA-Verfahren durch einen Spreizungscode bestimmt. Beispielsweise kann ein Steuerkanal vorgesehen sein, der benutzt wird, um von der Basisstation Steuerdaten vor einem Verbindungsaufbau an alle Terminals zu verteilen. Nach einem Verbindungsaufbau z.B. zwischen einem Terminal und der Basisstation werden Nutzdaten über wenigstens einen Nutzkanal übertragen.

Die Basisstation 1 weist einer Verbindung zwischen beispielsweise zwei Terminals 2 und 7 eine Benutzer-Verbindungskennung (user connection identification) zu. Diese Benutzer-Verbindungskennung besteht aus einer Quell-Terminalkennung (source device identification) von M Bits, einer Ziel-Terminalkennung (destination device identification) von N Bits und einer Verbindungskennung von L Bits, wobei M, N, L Element der natürlichen Zahlen sind. Die Benutzer-Verbindungskennung mit einer Quell-Terminalkennung, einer Ziel-Terminalkennung und einer Verbindungskennung kann ein Terminal ggf. selbst vergeben oder kann fest vorgegeben sein. Die Gesamtsumme der Bits zur eindeutigen Identifizierung einer Benutzerverbindung beträgt somit M + N + L Bits. Wenn beispielsweise M=N=8 und L=6 ist, beträgt die Gesamtzahl 2²² der möglichen von der Basisstation 1 zu verwaltenden Benutzerverbindungen. Eine solche Anzahl von Benutzerverbindungen als Adressen zu verwalten, stellt einen hohen Aufwand dar.

Im folgenden wird dargestellt, wie die Verwaltung einer solchen großen Anzahl innerhalb eines Terminals und/oder einer Basisstation von Adressen durch eine flexible Reduktionsmethode vermieden wird. Hierbei wird jede vollständige Kennung einem Kompressorblock 8, 9 oder 10 zugeführt, wie dies das Funktionsbild der Fig. 2 zeigt. Ein Kompressorblock 8, 9 und 10 ist eine Speicherschaltung (RAM), bei dem eine vollständige Kennung einen Zeiger (pointer) für eine gespeicherten Wert darstellt (Look-up-Tabelle = LUT). Dieser Wert weist weniger Bits als die vollständige Kennung auf und stellt somit eine reduzierte Kennung dar. Der Kompressorblock 8 bildet aus der vollständigen Quellen-Terminal-Kennung von M Bits eine reduzierte Quellen-Terminal-Kennung von Mq Bits, der Kompressorblock 9 aus der vollständigen Bestimmungs-Terminal-Kennung von N Bits eine reduzierte Bestimmungs-Terminal-Kennung von Nq Bits und der Kompressorblock 10 aus der vollständigen Verbindungs-Kennung von L Bits eine reduzierte Verbindungs-Kennung von Lq Bits, wobei M > Mq, N > Nq und L > Lq. Somit ist auch die Gesamtsumme der Bits oder Wortlänge zur eindeutigen Identifizierung einer Benutzer-Verbindung von M + N + L Bits auf eine reduzierte Gesamtsumme oder reduzierte Wortlänge von Mq + Nq + Lq Bits reduziert.

Das in Fig. 2 dargestellte Funktionsbild ist Bestandteil der Basisstation 1 und/oder der Terminals 2 bis 7 und kann bei solchen Anwendungen verwendet werden, bei denen nicht alle zur Verfügung stehenden vollständigen Kennungen benutzt werden müssen sondern nur eine eingeschränkte Anzahl (z.B. bei preisgünstigen Terminals im Konsumerbereich). Bei dieser Reduktionsmethode steht an der Funkschnittstelle (Schnittstelle zwischen den Terminals 2 bis 7 und der Basisstation) jeweils die nichtreduzierte also vollständige Kennung zur Verfügung, während innerhalb eines Terminals 2 bis 7 bzw. der Basisstation 1 lokal eine jeweils reduzierte Kennung benutzt wird.

Die Gesamtsumme der reduzierten Kennungen Mq + Nq + Lq kann durch einen zusätzlichen Kompressorblock 11 (vgl. Fig. 2) noch weiter auf Mr Bits reduziert werden, wobei Mq + Nq + Lq > Mr ist. Dieser Kompressorblock 11 stellt ebenfalls eine Speicherschaltung (RAM) dar.

Die Kompressorblöcke 8 bis 11 können auch als Assoziativspeicher (Content Adressable Memory = CAM) ausgebildet sein, bei dem eine Information (reduzierte Kennung) nicht aufgrund einer Adresse, sondern aufgrund eines Teils der Speicherinformation gefunden wird.

Mit Hilfe der oben geschilderten Reduktionsmethode lässt sich beispielsweise die Anzahl der zu verwaltenden möglichen Kennungen in einem Terminal 2 bis 7 und/oder der Basisstation 1 von 2²² Möglichkeiten auf 256 Möglichkeiten intern reduzieren, wobei M = N = 8 und L = 6 ist. Für diese Anwendung kann Mq = Nq = Lq = 4 gewählt werden, so dass sich am Eingang des Kompressorblocks 11 dann 12 Bit ergeben. Dieser reduziert dann die Gesamtsumme auf 8 Bits. Die Kompressorblöcke 8 und 9 können hierbei als RAM zur Speicherung von 256 * 4 Bits und der Kompressorblock 10 als RAM zur Speicherung von 64 * 4 Bits ausgebildet sein. Als Kompressorblock 11 kann ebenfalls ein RAM mit einer Kapazität von 4096 * 8 Bits oder ein CAM mit einer Kapazität von 256 * 12 Bits verwendet werden.

Die Erfindung kann in jedem existierenden oder noch einzuführenden Mobilfunksystem, wie z.B. GSM- oder UMTS- Mobilfunksystem (UMTS = Universal Mobile Telecommunication System) als zusätzliche Schaltungsteile eingefügt werden. Hierbei ist das Funktionsbild nach Fig. 2 Bestandteil eines Prozessors im niederfrequenten Teil eines Terminals 2 bis 7 oder der Basisstation 1.

Vor einem Verbindungsaufbau werden beispielsweise die jeweiligen benutzten Kennungen für eine Verbindung von der für den Verbindungsaufbau verantwortlichen Vorrichtung (Basisstation 1) den Terminals über bestimmte hierfür vorgesehene Kanäle mitgeteilt. Wie oben erwähnt, können die Kennungen auch von einem Terminal 2 bis 7 vergeben werden oder fest vorgegeben sein. In einem Terminal 2 bis 7 werden die von der Basisstation mitgeteilten Kennungen als Adressen für die reduzierten Kennungen zugewiesen, so dass die übertragenen Kennungen während einer Verbindung eindeutig mit reduzierten Kennungen korrespondieren.

Durch die beschriebene Reduktionsmethode wird zwar die Anzahl der möglichen im Terminal oder der Zentralvorrichtung zu verwaltenden Verbindungen reduziert, aber dafür ergibt sich ein geringerer Hardwareaufwand (Kostenreduktion) und eine schnellere Verarbeitung der empfangenen Kennungen. Ferner ist die erfindungsgemäße Reduktionsmethode sehr flexibel, da nicht die aus verschiedenen Kennungen zusammengesetzte Gesamtkennung (Benutzer-Verbindungskennung) sondern jede einzelne Kennung (Quell-Terminalkennung, Ziel-Terminalkennung, Verbindungskennung) unabhängig voneinander reduziert wird. Durch die Reduktion jeder einzelnen Kennung können mehr Gesamtkennungen bei einer vorgegebenen Speicherkapazität reduziert werden als bei der alleinigen Reduktion von Gesamtkennungen.

## Patentansprüche

1. Netzwerk zur drahtlosen Übertragung von Informationen mit einer Zentralvorrichtung (1) zur Steuerung von Benutzer-Verbindungen zwischen wenigstens zwei Terminals (2 bis 7) über eine Benutzer-Verbindungskennung, die aus mehreren Kennungen besteht,
**dadurch gekennzeichnet,**
**dass** wenigstens die Terminals (2 bis 7) für jede Kennung einen Kompressionsblock (8 bis 10) zur Reduktion einer Kennung enthalten,
**dass** wenigstens die Terminals (2 bis 7) zur Bildung einer reduzierten Gesamtkennung aus den jeweils reduzierten Kennungen vorgesehen sind und
**dass** wenigstens die Terminals (2 bis 7) dermaßen gestaltet sind, dass sie die mehr als eine reduzierte Kennung enthaltende reduzierte Gesamtkennung zur Identifizierung einer Benutzer-Verbindung zwischen wenigstens zwei Terminals (2 bis 7) verwenden.

2. Netzwerk nach Anspruch 1,
**dadurch gekennzeichnet,**
**dass** wenigstens ein Terminal (2 bis 7) einen weiteren Kompressionsblock (11) enthält, der zur Reduktion der reduzierten Gesamtkennung zu einer weiter reduzierten Gesamtkennung vorgesehen ist.

3. Netzwerk nach Anspruch 1,
**dadurch gekennzeichnet,**
**dass** die Terminals (2 bis 7) Mobilstationen und die Zentralvorrichtung (1) zur Steuerung von Benutzer-Verbindungen eine Basisstation oder eine Mobilstation ist.

4. Terminal (2 bis 7) für ein Netzwerk zur drahtlosen Übertragung von Informationen mit einer Zentralvorrichtung (1) zur Steuerung von Benutzer-Verbindungen zwischen wenigstens zwei Terminals (2 bis 7) über eine Benutzer-Verbindungskennung, die aus mehreren Kennungen besteht,
**dadurch gekennzeichnet,**
**dass** das Terminal (2 bis 7) für jede Kennung einen Kompressionsblock (8 bis 10) zur Reduktion einer Kennung enthält,
**dass** das Terminal (2 bis 7) zur Bildung einer reduzierten Gesamtkennung aus den jeweils reduzierten Kennungen vorgesehen ist und
**dass** das Terminal (2 bis 7) dermaßen gestaltet ist, dass es die mehr als eine reduzierte Kennung enthaltende reduzierte Gesamtkennung zur Identifizierung einer Benutzer-Verbindung zwischen wenigstens zwei Terminals (2 bis 7) verwendet.

5. Zentralvorrichtung (1) zur Steuerung von Benutzer-Verbindungen zwischen wenigstens zwei Terminals (2 bis 7) und/oder einem Terminal (2 bis 7) und der Zentralvorrichtung (1) über eine Benutzer-Verbindungskennung, die aus mehreren Kennungen besteht, für ein Netzwerk zur drahtlosen Übertragung von Informationen,
**dadurch gekennzeichnet,**
**dass** die Zentralvorrichtung (1) für jede Kennung einen Kompressionsblock (8 bis 10) zur Reduktion einer Kennung enthält,
**dass** die Zentralvorrichtung (1) zur Bildung einer reduzierten Gesamtkennung aus den jeweils reduzierten Kennungen vorgesehen ist und
**dass** die Zentralvorrichtung (1) dermaßen gestaltet ist, dass sie die mehr als eine reduzierte Kennung enthaltende reduzierte Gesamtkennung zur Identifizierung einer Benutzer-Verbindung zwischen wenigstens einem Terminal (2 bis 7) und der Zentralvorrichtung (1) verwendet.

## Revendications

1. Réseau de transmission sans fil d'informations avec un dispositif central (1) pour la commande de connexions d'utilisateurs entre au moins deux terminaux (2 à 7) par l'intermédiaire d'une identification de connexion d'utilisateur qui se compose de plusieurs identifications,
**caractérisé en ce**
**qu'**au moins les terminaux (2 à 7) contiennent pour chaque identification un bloc de compression (8 à 10) pour la réduction d'une identification,
**qu'**au moins les terminaux (2 à 7) sont prévus pour la formation d'une identification totale réduite à partir des identifications respectivement réduites et
**qu'**au moins les terminaux (2 à 7) sont conçus de telle sorte qu'ils utilisent l'identification totale réduite contenant plus d'une identification réduite pour l'identification d'une connexion d'utilisateur entre au moins deux terminaux (2 à 7).

2. Réseau selon la revendication 1,
**caractérisé en ce**
**qu'**au moins un terminal (2 à 7) contient un bloc de compression (11) supplémentaire qui est prévu pour la réduction de l'identification totale réduite en une identification totale réduite davantage.

3. Réseau selon la revendication 1,
**caractérisé en ce**
**que** les terminaux (2 à 7) sont des stations mobiles et le dispositif central (1) pour la commande de connexions d'utilisateur est une station de base ou une station mobile.

4. Terminal (2 à 7) pour un réseau de transmission sans fil d'informations avec un dispositif central (1) pour la commande de connexions d'utilisateur entre au moins deux terminaux (2 à 7) par l'intermédiaire d'une identification de connexion d'utilisateur qui se compose de plusieurs identifications,
**caractérisé en ce**
**que** le terminal (2 à 7) contient pour chaque identification un bloc de compression (8 à 10) pour la réduction d'une identification,
**que** le terminal (2 à 7) est prévu pour la formation d'une identification totale réduite à partir des identifications respectivement réduites et
**que** le terminal (2 à 7) est conçu de telle sorte qu'il utilise l'identification totale réduite contenant plus d'une identification réduite pour l'identification d'une connexion d'utilisateur entre au moins deux terminaux (2 à 7).

5. Dispositif central (1) pour la commande de connexions d'utilisateur entre au moins deux terminaux (2 à 7) et/ou un terminal (2 à 7) et le dispositif central (1) par l'intermédiaire d'une identification de connexion d'utilisateur qui se compose de plusieurs identifications pour un réseau de transmission sans fil d'informations,
**caractérisé en ce**
**que** le dispositif central (1) contient pour chaque identification un bloc de compression (8 à 10) pour la réduction d'une identification,
**que** le dispositif central (1) est prévu pour la formation d'une identification totale réduite à partir des identifications respectivement réduites et
**que** le dispositif central (1) est conçu de telle sorte qu'il utilise l'identification totale réduite contenant plus d'une identification réduite pour l'identification d'une connexion d'utilisateur entre au moins un terminal (2 à 7) et le dispositif central (1).

## Claims

1. A network for wireless transmission of information, comprising a central device (1) for controlling user connections between at least two terminals (2 to 7) via a user connection identifier which consists of a plurality of identifiers, **characterized in that** at least the terminals (2 to 7) comprise for each identifier a compressor block (8 to 10) to compress an identifier, **in that** at least the terminals (2 to 7) are arranged for forming a compressed overall identifier from the respectively compressed identifiers, and **in that** at least the terminals (2 to 7) are arranged such that they use the compressed overall identifier containing more than one compressed identifier for identification of a user connection between at least two terminals (2 to 7).

2. A network as claimed in claim 1, **characterized in that** at least one terminal (2 to 7) includes a further compressor block (11) which is provided for the compression of the compressed overall identifier to a further compressed overall identifier.

3. A network as claimed in claim 1, **characterized in that** the terminals (2 to 7) are mobile stations and the central device (1) for controlling user connections is a base station or a mobile station.

4. A terminal (2 to 7) for a network for wireless transmission of information, comprising a central device (1) for controlling user connections between at least two terminals (2 to 7) via a user connection identifier which consists of a plurality of identifiers, **characterized in that** for each identifier the terminal (2 to 7) includes a compressor block (8 to 10) for compressing an identifier, **in that** the terminal is arranged for forming a compressed overall identifier from the respectively compressed identifiers and **in that** the terminal (2 to 7) is arranged such that it uses the compressed overall identifier containing more than one compressed identifier for identification of a user connection between at least two terminals (2 to 7).

5. A central device (1) for controlling user connections between at least two terminals (2 to 7) and/or one terminal (2 to 7) and the central device (1) via a user connection identifier which contains a plurality of identifiers for a network for wireless transmission of information, **characterized in that** for each identifier the central device (1) includes a compressor block (8 to 10) for compressing an identifier, **in that** the central device (1) is arranged for forming a reduced overall identifier from the respectively compressed identifiers and **in that** the central device (1) is arranged such that it uses the compressed overall identifier containing more than one compressed identifier for identification of a user connection between at least a terminal (2 to 7) and the central device (1).
